# EUROPEAN PATENT SPECIFICATION

(11) **EP 3 581 639 B1**
(45) Date of publication and mention of the grant of the patent: **04.08.2021**
(21) Application number: 19178371.1
(22) Date of filing: 05.06.2019
(51) Int. Cl.: C12G 1/022, C12G 1/02

(54) **AN APPARATUS AND METHOD FOR WINE-MAKING IN THE ABSENCE OF OXYGEN**
VORRICHTUNG UND VERFAHREN ZUR WEINHERSTELLUNG UNTER SAUERSTOFFAUSSCHLUSS
APPAREIL ET PROCEDE DE VINIFICATION EN ABSENCE D'OXYGENE

(30) Priority: 13.06.2018 IT 201800006282
(43) Date of publication of application: 18.12.2019
(73) Proprietor: Elegir, Andrea, 14051 Loazzolo (Asti) (IT); Elegir, Luca, 14051 Loazzolo (Asti) (IT)
(72) Inventor: Elegir, Andrea, 14051 Loazzolo (Asti) (IT); Elegir, Luca, 14051 Loazzolo (Asti) (IT)
(74) Representative: Marchitelli, Mauro

(56) References cited:
- EP-A1- 3 144 377
- WO-A1-89/08698
- WO-A1-2011/148227
- WO-A1-2011/148228
- DE-C1- 4 434 394

## Description

### Field of the invention

The present invention relates, in general, to wine-making techniques.

In particular, the invention relates to an apparatus and a method for wine-making in the absence of oxygen.

### Description of the prior art

Wine-making is a biochemical process for transforming grape must into wine. The wine-making process is carried out in wine-making tanks, usually of stainless steel, in which the alcoholic fermentation takes place, which transforms the sugar contained in the grape must into alcohol.

One of the problems of wine-making processes is oxidation of the must due to contact with the oxygen of the atmosphere. To protect the must from oxidation, the use of antioxidants, mainly sulfur dioxide, is widespread in various stages of the wine-making process.

The document EP-A-3144377 has already proposed a wine-making apparatus for alcoholic fermentation of the must in the absence of oxygen. The wine-making apparatus described in EP-A-3144377 comprises a wine-making tank having a bottom wall, a side wall and an upper wall, which enclose a wine-making volume. The bottom wall has an opening for discharging the dregs that are formed during the wine-making process. Inside the wine-making tank there is an inflatable air-bladder arranged between the free surface of the liquid contained in the wine-making tank and the upper wall of the wine-making tank. The inflatable air-bladder expands as the dregs are discharged from the lower part of the wine-making tank and prevents contact between the air and the must.

The drawback of the wine-making apparatus known in EP-A-3144377 is that it is rather complex to produce an inflatable air-bladder that can fill the entire volume of the wine-making tank above the liquid due to problems related to the volume dimensions to compensate.

DE 44 34 394 C1 discloses an apparatus according to the pre-characterizing portion of claim 1, wherein the liquid contained in the fermentation tank is forced out of the fermentation tank into an auxiliary tank. On reaching given liquid level in the auxiliary tank, an air bleed channel is closed to build up an overpressure in the system containing the fermentation tank and the auxiliary tank. The main problem of the apparatus according to DE 44 34 394 C1 is that in use the fermentation tank and the auxiliary tank are pressurized and must be built in accordance with the standards of pressurized containers (autoclaves), which increases considerably the costs.

WO2011148227A1 and WO2011148228A1 disclose an apparatus a method for breaking the cap on top of the liquid contained in a fermentation tank. The solutions disclosed in WO2011148227A1 and WO2011148228A1 are not suitable for the wine-making in the absence of oxygen.

### Object and summary of the invention

The present invention aims to provide an apparatus and a method for wine-making in the absence of oxygen that overcomes the problems of the prior art.

According to the present invention, this object is achieved by an apparatus and a method having the characteristics forming the subject of claims 1 and 7.

The claims form an integral part of the disclosure provided here in relation to the invention.

### Brief description of the drawings

The present invention will now be described in detail with reference to the attached drawings, given purely by way of non-limiting example, wherein:

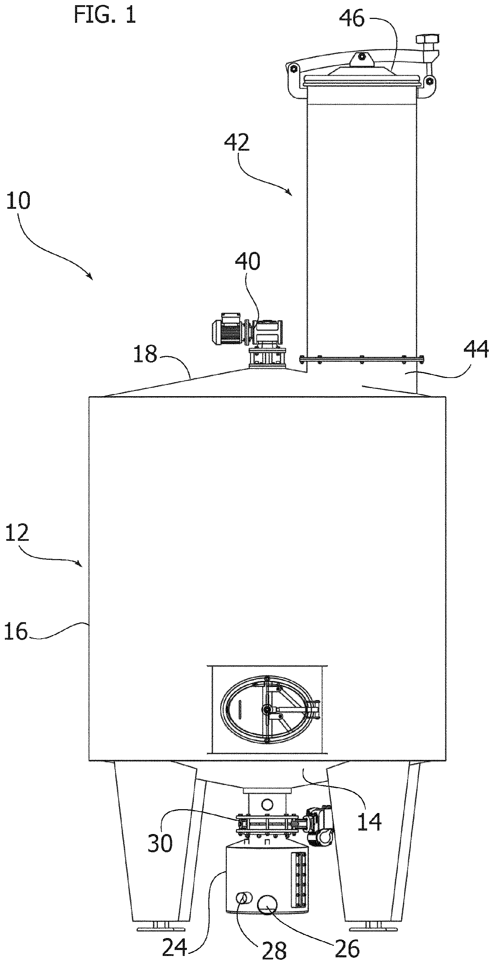

- Figure 1 is a schematic side view of a wine-making apparatus according to the present invention,
- Figure 2 is a partially cross-sectioned perspective view of the wine-making apparatus of Figure 1, and
- Figures 3, 4 and 5 illustrate three different embodiments of sealing devices for wine-making in the absence of oxygen.

### Detailed description

With reference to the Figures, numeral 10 indicates a wine-making apparatus for alcoholic fermentation of grape must in the absence of oxygen. The wine-making apparatus 10 comprises a wine-making tank 12 having a bottom wall 14, a side wall 16 and an upper wall 18. The walls 14, 16, 18 define a wine-making volume 20. The side wall 16 may have a gap for circulating a heat transfer fluid to control the temperature of the must during the wine-making process. The walls 14, 16, 18 of the wine-making tank can be made of stainless steel.

The bottom wall 14 has an opening for discharging the dregs 22 that are formed during the wine-making process. Below the dregs-discharge opening 22 is a container for collecting dregs 24, which can be provided with a main dregs-removal valve 26 and a secondary dregs-removal valve 28. A motorized butterfly valve 30 may be arranged between the dregs-collection container 24 and the dregs-discharge opening 22.

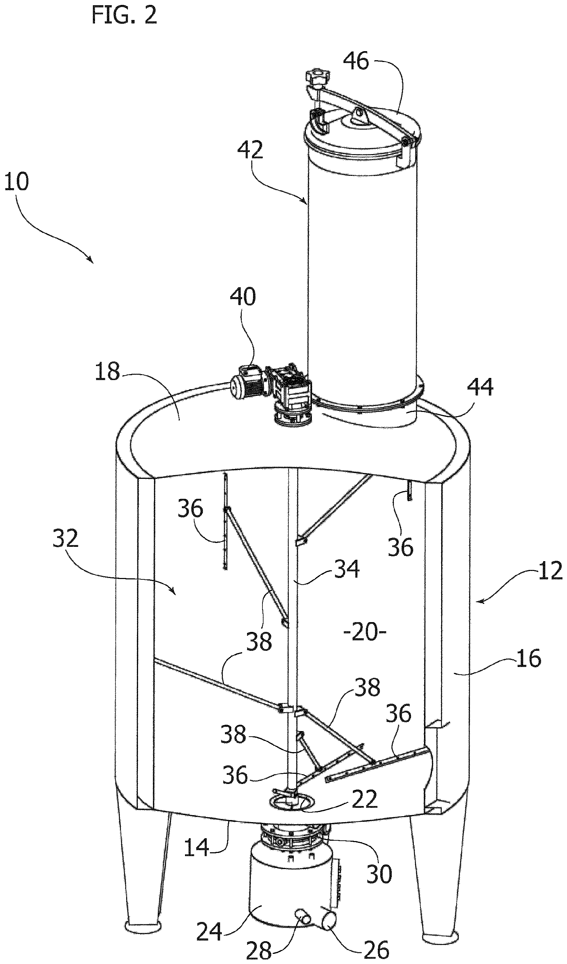

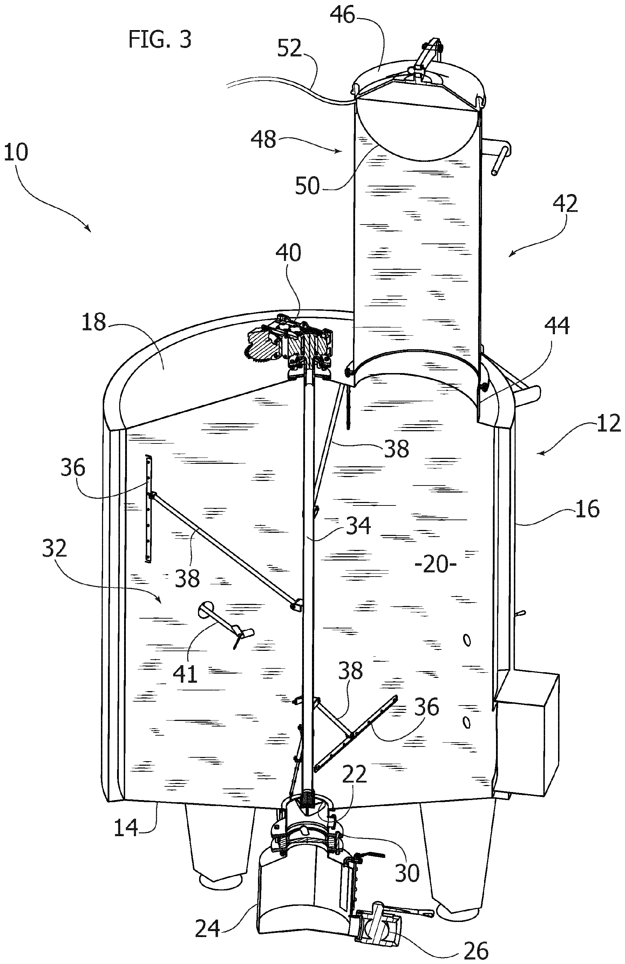

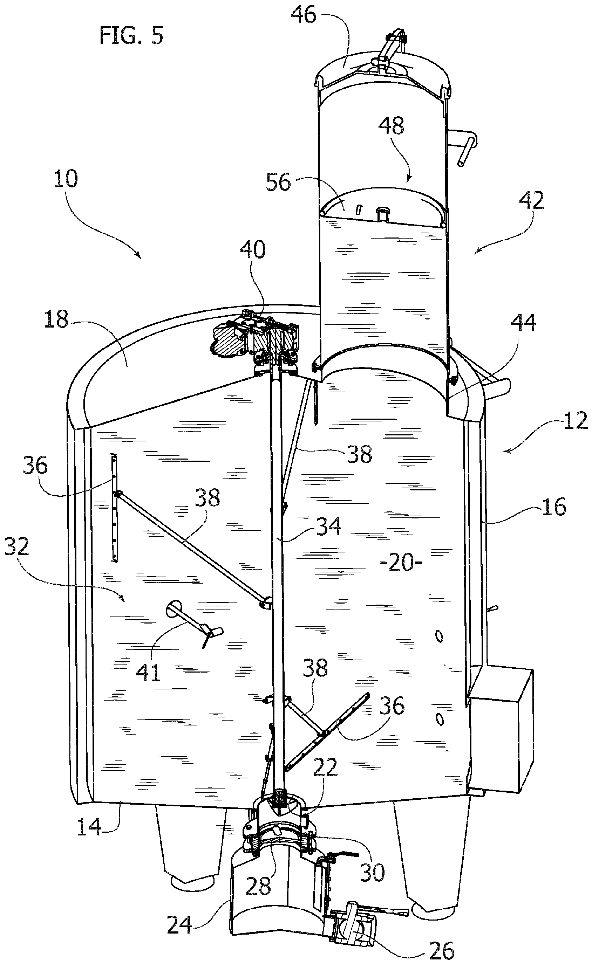

With reference to Figures 2, 3 and 5, a scraper device 32 can be arranged inside the wine-making tank 12, comprising a central shaft 34 rotatable about a vertical axis and a plurality of scraping elements 36 connected to the central shaft 34 by means of respective rods 38. The central shaft 34 can be rotated about a vertical axis by means of a gearmotor assembly 40 located outside the wine-making tank 12, for example, above the upper wall 18. With reference to Figures 3 and 5, the wine-making apparatus 10 can optionally comprise stirring blades 41 projecting into the wine-making volume 20.

The wine-making apparatus 10 comprises an auxiliary tank 42 located outside the wine-making tank 12. The auxiliary tank 42 extends above the upper wall 18 of the wine-making tank 12. The auxiliary tank 42 has the form of a tubular element with a vertical axis open at its ends. The auxiliary tank may have a circular cross-section. The diameter of the auxiliary tank 42 may be less than half the diameter of the wine-making tank 12. The auxiliary tank 42 may also be made of stainless steel.

The volume of the auxiliary tank 42 can be between 2 and 20% with respect to the volume of the wine-making tank 12.

The lower end of the auxiliary tank 42 communicates with the wine-making volume 20 through the upper wall 18 of the wine-making tank 12. The upper wall 18 of the wine-making tank 12 may have an opening provided with a collar 44 projecting upwards. The auxiliary tank 42 can be sealed shut to the collar 44 by screws, welding, or by means of clamps. The upper end of the auxiliary tank 42 can be closed by an openable cover 46.

The arrangement of the auxiliary tank 42 is such that the liquid contained in the wine-making tank 12 enters the auxiliary tank 42 when the wine-making volume 20 is completely filled with liquid. The free surface of the liquid contained in the auxiliary tank 42 is above the upper wall of the wine-making tank 12. Therefore, the liquid contained in the wine-making volume 20 is isolated from contact with the atmosphere. When the wine-making volume 20 is completely full, the only area of contact between the liquid and the atmosphere could be on the free surface of the liquid contained in the auxiliary tank 42.

Inside the auxiliary tank 42 there is a sealing device 48 that isolates the free surface of the liquid contained in the auxiliary tank from the atmosphere.

With reference to Figure 3, in one embodiment, the sealing device 48 may comprise an elastic air-bladder 50 located at the upper end of the auxiliary tank 42 and inflated with pressurized air coming from a compressed air duct 52. The air-bladder 50 expands elastically and fills the volume comprised between the cover 46 and the free surface of the liquid contained in the auxiliary tank 42, thus the liquid avoids contact with the atmosphere. During the wine-making process, discharging of the dregs through the dregs-collection container 24 causes a reduction in the volume of the liquid, and lowering of the level of the free surface of the liquid contained in the auxiliary tank 42. The pressurized air-bladder 50 expands as the level of the liquid is lowered inside the auxiliary tank 42 so that isolation of the liquid from the atmosphere is maintained even after the dregs-removal operations.

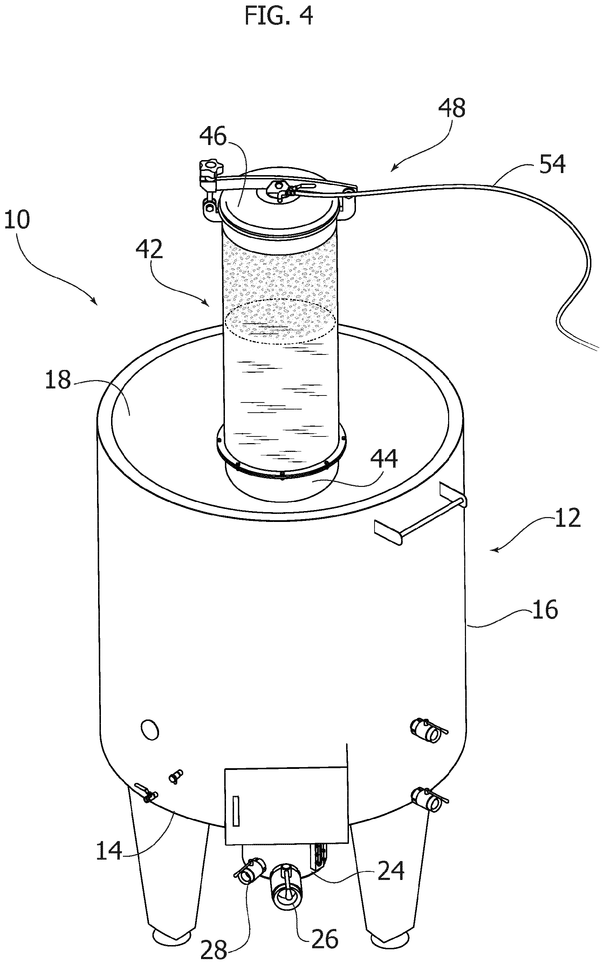

With reference to Figure 4, in one embodiment the sealing device 48 may comprise an inert gas supply conduit 54 for feeding pressurized inert gas (for example nitrogen) into the upper end portion of the auxiliary tank 42. In this case, it is necessary for the cover 46 to seal off the upper end of the auxiliary tank 42 in an airtight manner. In this embodiment, the volume of the auxiliary tank 42 comprised between the cover 46 and the free surface of the liquid contained in the auxiliary tank 42 is filled with inert gas so that the contact of the liquid with the oxygen contained in the atmosphere is avoided. Reduction in the level of the liquid contained in the auxiliary tank 42 due to discharge of the dregs leads to an increase in the volume filled with inert gas, so that - even in this case - isolation of the liquid from the atmosphere is maintained even after dregs-removal operations.

With reference to Figure 5, in one embodiment the sealing device 48 may comprise a floating cover 56 that floats on the free surface of the liquid contained in the auxiliary tank 42. The floating cover 56 may have an edge that slides tightly on the inner wall of the auxiliary tank 42 in the form of a piston. The floating cover may have an inflatable elastic edge which, when inflated, establishes a seal against the inner wall of the auxiliary tank 42. The floating cover 56 isolates the liquid contained in the auxiliary tank 42 from the atmosphere. The reduction in the level of the liquid in the auxiliary tank 42 due to the discharge of the dregs leads to lowering of the floating cover 56, so that in this embodiment as well, isolation of the liquid from the atmosphere is maintained even during dregs-removal

During operation, the wine-making apparatus 10 is filled with grape must coming from the pressing of the grape bunches. The must can be poured through the open upper end of the auxiliary tank 42.

After filling the wine-making apparatus 10, the must is subjected to an alcoholic fermentation process. The alcoholic fermentation process develops a large amount of carbon dioxide and, therefore, the wine-making tank 12 cannot be hermetically sealed in this stage, otherwise it would explode (1 atmosphere of pressure develops every 4 grams/liter of fermented sugars). The carbon dioxide that develops during alcoholic fermentation can be expelled through the open upper end of the auxiliary tank 42.

At the end of the alcoholic fermentation process, when CO₂ is no longer produced, the wine completely fills the wine-making tank 12 and, at least partially, the auxiliary tank 42. At this point, the upper portion of the auxiliary tank 42 is closed to isolate the wine from contact with the atmosphere. It is at this stage that the wine is particularly subject to the risk of oxidation because there is no longer the protection provided by the carbon dioxide produced by fermentation.

Alternatively, the auxiliary tank 42 can be hermetically closed for storing the must, but in any case in the absence of alcoholic fermentation.

In the embodiments of Figures 3 and 4, at the end of the alcoholic fermentation of the must, the air-bladder 50 is inflated, or pressurized inert gas is blown into the upper end portion of the auxiliary tank 42 after closing the cover 46. In the case of the embodiment of Figure 5, the floating cover 56 is inserted inside the auxiliary tank 42 at the end of the alcoholic fermentation process of the must.

At this point, the wine-making process continues in the absence of oxygen, or rather, without direct contact of the wine with the atmosphere. During the process, dregs are formed that deposit on the bottom wall 14 of the wine-making tank 12 and which are periodically removed through the dregs-collection container 24. As seen above, the sealing device 48 associated with the auxiliary tank 42 continues to keep the liquid contained inside the auxiliary tank 42 isolated from the atmosphere also following the lowering of the level of the liquid contained in the auxiliary tank 42 due to the discharge of the dregs. The entire wine-making process can, therefore, take place in the absence of contact with the atmosphere. Therefore, the wine-making method according to the invention does not require the addition of antioxidant substances to the wine, which greatly improves the health characteristics of the wine without compromising the organoleptic characteristics.

| **LIST OF REFERENCE SIGNS** | |
|---|---|
| Wine-making apparatus | 10 |
| Wine-making tank | 12 |
| Bottom wall | 14 |
| Side wall | 16 |
| Upper wall | 18 |
| Wine-making volume | 20 |
| Opening for discharging dregs | 22 |
| Container for collecting dregs | 24 |
| Main dregs-removal valve | 26 |
| Secondary dregs-removal valve | 28 |
| Butterfly valve | 30 |
| Scraping device | 32 |
| Central shaft | 34 |
| Scraping elements | 36 |
| Rods | 38 |
| Gearmotor assembly | 40 |
| Stirring blades | 41 |
| Auxiliary tank | 42 |
| Collar | 44 |
| Cover | 46 |
| Sealing device | 48 |
| Air-bladder | 50 |
| Inflating conduit | 52 |
| Inert gas supply conduit | 54 |
| Floating cover | 56 |

## Claims

1. A wine-making apparatus (10) comprising:
- a wine-making tank (12) having a bottom wall (14), a side wall (16) and an upper wall (18), which enclose a wine-making volume (20), and
- an auxiliary tank (42) located outside the wine-making tank (12) above the upper wall (18),
**characterized in that** the auxiliary tank (42) has the form of a tubular element with a vertical axis open at its ends, wherein the auxiliary tank (42) has a lower end that communicates with the wine-making volume (20) through said upper wall (18), so that the liquid contained in the wine-making tank (12) enters the auxiliary tank (42) when the wine-making volume (20) is completely filled with liquid and the free surface of the liquid contained in the auxiliary tank (42) is above the upper wall (18) of the wine-making tank (12), and wherein the auxiliary tank (42) comprises a sealing device (48), which is configured to isolate the free surface of the liquid contained in the auxiliary tank (42) from the atmosphere.

2. A wine-making apparatus according to claim 1, wherein the auxiliary tank (42) has an open upper end closed by a removable cover (46).

3. A wine-making apparatus according to claim 2, wherein said sealing device (48) comprises an inflatable air-bladder (50) arranged between said cover (46) and the free surface of the liquid contained in the auxiliary tank (42).

4. A wine-making apparatus according to claim 2, wherein said sealing device (48) comprises an inert gas supply conduit (54) communicating with the upper end portion of the auxiliary tank (42), configured for filling with inert gas the upper end portion of the auxiliary tank (42) comprised between said cover (46) and the free surface of the liquid contained in the auxiliary tank (42).

5. A wine-making apparatus according to claim 1 or claim 2, wherein said sealing device (48) comprises a floating cover (56) configured to float on the free surface of the liquid contained inside the auxiliary tank (42) and having an edge in sealing contact against the inner wall of the auxiliary tank (42).

6. A wine-making apparatus according to any one of the preceding claims, wherein said auxiliary tank (42) has a volume comprised between 2 and 20% with respect to the volume of said wine-making tank (12).

7. A wine-making method comprising:
- providing a wine-making tank (12) having a bottom wall (14), a side wall (16) and an upper wall (18) which enclose a wine-making volume (20),
- providing an auxiliary tank (42) located outside the wine-making tank (12) above said upper wall (18), wherein the auxiliary tank (42) has the form of a tubular element with a vertical axis open at its ends and has a lower end that communicates with the wine-making volume (20) through said upper wall (18),
- filling the wine-making tank (12) with grape must and carrying out the alcoholic fermentation of the grape must, wherein at the end of the alcoholic fermentation, the wine-making volume (20) is completely filled with wine and the wine enters the auxiliary tank (42), so that the free surface of the wine contained in the auxiliary tank (42) is above said upper wall (18) of the wine-making tank (12),
- isolating the free surface of the wine contained in the auxiliary tank (12) from the atmosphere and continuing the wine-making process in the absence of contact with the atmosphere.

8. A wine-making method according to claim 7, wherein isolating the free surface of the wine from the atmosphere comprises inflating an air-bladder (50) arranged between a removable cover (46) of the auxiliary tank (42) and the free surface of the wine contained in the auxiliary tank (42).

9. A wine-making method according to claim 7, wherein isolating the free surface of the wine from the atmosphere comprises filling with inert gas the upper end portion of the auxiliary tank (42) comprised between a cover (46) and the free surface of the wine contained in the auxiliary tank (42).

10. A wine-making method according to claim 7, wherein isolating the free surface of the wine from the atmosphere comprises positioning a floating cover (56) on the free surface of the wine contained in the auxiliary tank (42), wherein said floating cover has an edge in sealing contact against the inner wall of the auxiliary tank (42).

## Patentansprüche

1. Weinherstellungsvorrichtung (10), umfassend:
- einen Weinherstellungstank (12) mit einer Bodenwand (14), einer Seitenwand (16) und einer oberen Wand (18), die ein Weinherstellungsvolumen (20) einschließen, und
- einen außerhalb des Weinherstellungstanks (12) oberhalb der oberen Wand (18) befindlichen Zusatztank (42),
**dadurch gekennzeichnet, dass** der Zusatztank (42) die Form eines Rohrelements mit einer an ihren Enden offenen vertikalen Achse aufweist, wobei der Zusatztank (42) ein unteres Ende aufweist, das durch die obere Wand (18) hindurch mit dem Weinherstellungsvolumen (20) in Verbindung steht, so dass die in dem Weinherstellungstank (12) enthaltene Flüssigkeit in den Zusatztank (42) eintritt, wenn das Weinherstellungsvolumen (20) vollständig mit Flüssigkeit gefüllt ist und sich die freie Oberfläche der in dem Zusatztank (42) enthaltenen Flüssigkeit oberhalb der oberen Wand (18) des Weinherstellungstanks (12) befindet, und wobei der Zusatztank (42) eine Abdichteinrichtung (48) umfasst, die dafür ausgelegt ist, die freie Oberfläche der in dem Zusatztank (42) enthaltenen Flüssigkeit gegenüber der Atmosphäre zu isolieren.

2. Weinherstellungsvorrichtung nach Anspruch 1, wobei der Zusatztank (42) ein offenes, durch eine abnehmbare Abdeckung (46) verschlossenes oberes Ende aufweist.

3. Weinherstellungsvorrichtung nach Anspruch 2, wobei die Abdichteinrichtung (48) eine zwischen der Abdeckung (46) und der freien Oberfläche der in dem Zusatztank (42) enthaltenen Flüssigkeit angeordnete aufblasbare Luftblase (50) umfasst.

4. Weinherstellungsvorrichtung nach Anspruch 2, wobei die Abdichteinrichtung (48) eine mit dem oberen Endabschnitt des Zusatztanks (42) in Verbindung stehende Inertgas-Versorgungsleitung (54) umfasst, die dafür ausgelegt ist, den oberen Endabschnitt des Zusatztanks (42) zwischen der Abdeckung (46) und der freien Oberfläche der in dem Zusatztank (42) enthaltenen Flüssigkeit mit Inertgas zu füllen.

5. Weinherstellungsvorrichtung nach Anspruch 1 oder Anspruch 2, wobei die Abdichteinrichtung (48) eine schwimmende Abdeckung (56) umfasst, die dafür ausgelegt ist, auf der freien Oberfläche der in dem Zusatztank (42) enthaltenen Flüssigkeit zu schwimmen, und einen Rand aufweist, der mit der Innenwand des Zusatztanks (42) in abdichtendem Kontakt steht.

6. Weinherstellungsvorrichtung nach einem der vorhergehenden Ansprüche, wobei der Zusatztank (42) ein Volumen zwischen 2 und 20 % in Bezug auf das Volumen des Weinherstellungstanks (12) aufweist.

7. Verfahren zur Weinherstellung, umfassend:
- Bereitstellen eines Weinherstellungstanks (12) mit einer Bodenwand (14), einer Seitenwand (16) und einer oberen Wand (18), die ein Weinherstellungsvolumen (20) einschließen,
- Bereitstellen eines außerhalb des Weinherstellungstanks (12) oberhalb der oberen Wand (18) befindlichen Zusatztanks (42), wobei der Zusatztank (42) die Form eines Rohrelements mit einer an ihren Enden offenen vertikalen Achse und ein unteres Ende aufweist, das durch die obere Wand (18) hindurch mit dem Weinherstellungsvolumen (20) in Verbindung steht,
- Füllen des Weinherstellungstanks (12) mit Traubenmost und Durchführen der alkoholischen Gärung des Traubenmosts, wobei am Ende der alkoholischen Gärung das Weinherstellungsvolumen (20) vollständig mit Wein gefüllt ist und der Wein in den Zusatztank (42) eintritt, so dass sich die freie Oberfläche des in dem Zusatztank (42) enthaltenen Weins oberhalb der oberen Wand (18) des Weinherstellungstanks (12) befindet,
- Isolieren der freien Oberfläche des in dem Zusatztank (12) enthaltenen Weins gegenüber der Atmosphäre und Fortsetzen des Weinherstellungsprozesses ohne Kontakt zur Atmosphäre.

8. Verfahren zur Weinherstellung nach Anspruch 7, wobei das Isolieren der freien Oberfläche des Weins gegenüber der Atmosphäre Aufblasen einer zwischen einer abnehmbaren Abdeckung (46) des Zusatztanks (42) und der freien Oberfläche des in dem Zusatztank (42) enthaltenen Weins angeordneten Luftblase (50) umfasst.

9. Verfahren zur Weinherstellung nach Anspruch 7, wobei das Isolieren der freien Oberfläche des Weins gegenüber der Atmosphäre Füllen des oberen Endabschnitts des Zusatztanks (42) zwischen einer Abdeckung (46) und der freien Oberfläche des in dem Zusatztank (42) enthaltenen Weins mit Inertgas umfasst.

10. Verfahren zur Weinherstellung nach Anspruch 7, wobei das Isolieren der freien Oberfläche des Weins gegenüber der Atmosphäre Positionieren einer schwimmenden Abdeckung (56) auf der freien Oberfläche des in dem Zusatztank (42) enthaltenen Weins umfasst, wobei die schwimmende Abdeckung einen Rand aufweist, der mit der Innenwand des Zusatztanks (42) in abdichtendem Kontakt steht.

## Revendications

1. Appareil de vinification (10) comprenant :
- une cuve de vinification (12) ayant une paroi inférieure (14), une paroi latérale (16) et une paroi supérieure (18), qui renferment un volume de vinification (20), et
- une cuve auxiliaire (42) située à l'extérieur de la cuve de vinification (12) au-dessus de la paroi supérieure (18),
**caractérisé en ce que** la cuve auxiliaire (42) se présente sous la forme d'un élément tubulaire avec un axe vertical ouvert au niveau de ses extrémités, où la cuve auxiliaire (42) a une extrémité inférieure qui communique avec le volume de vinification (20) par l'intermédiaire de ladite paroi supérieure (18), de sorte que le liquide contenu dans la cuve de vinification (12) entre dans la cuve auxiliaire (42) lorsque le volume de vinification (20) est complètement rempli de liquide et la surface libre du liquide contenu dans la cuve auxiliaire (42) est au-dessus de la paroi supérieure (18) de la cuve de vinification (12), et où la cuve auxiliaire (42) comprend un dispositif d'étanchéité (48), qui est configuré pour isoler la surface libre du liquide contenu dans la cuve auxiliaire (42) de l'atmosphère.

2. Appareil de vinification selon la revendication 1, dans lequel la cuve auxiliaire (42) a une extrémité supérieure ouverte fermée par un couvercle amovible (46).

3. Appareil de vinification selon la revendication 2, dans lequel ledit dispositif d'étanchéité (48) comprend une vessie d'air gonflable (50) agencée entre ledit couvercle (46) et la surface libre du liquide contenu dans la cuve auxiliaire (42).

4. Appareil de vinification selon la revendication 2, dans lequel ledit dispositif d'étanchéité (48) comprend un conduit d'alimentation en gaz inerte (54) communiquant avec la partie d'extrémité supérieure de la cuve auxiliaire (42), configuré pour remplir en gaz inerte la partie d'extrémité supérieure de la cuve auxiliaire (42) comprise entre ledit couvercle (46) et la surface libre du liquide contenu dans la cuve auxiliaire (42).

5. Appareil de vinification selon la revendication 1 ou 2, dans lequel ledit dispositif d'étanchéité (48) comprend un couvercle flottant (56) configuré pour flotter sur la surface libre du liquide contenu à l'intérieur du réservoir auxiliaire (42) et ayant un bord en contact étanche contre la paroi intérieure de la cuve auxiliaire (42).

6. Appareil de vinification selon l'une quelconque des revendications précédentes, dans lequel ladite cuve auxiliaire (42) a un volume compris entre 2 et 20% par rapport au volume de ladite cuve de vinification (12).

7. Procédé de vinification comprenant le fait :
- de fournir une cuve de vinification (12) ayant une paroi inférieure (14), une paroi latérale (16) et une paroi supérieure (18) qui renferment un volume de vinification (20),
- de fournir une cuve auxiliaire (42) située à l'extérieur de la cuve de vinification (12) au-dessus de ladite paroi supérieure (18), où la cuve auxiliaire (42) se présente sous la forme d'un élément tubulaire avec un axe vertical ouvert au niveau de ses extrémités et a une extrémité inférieure qui communique avec le volume de vinification (20) par l'intermédiaire de ladite paroi supérieure (18),
- de remplir la cuve de vinification (12) de moût de raisin et de réaliser la fermentation alcoolique du moût de raisin, où, à la fin de la fermentation alcoolique, le volume de vinification (20) est complètement rempli de vin et le vin entre dans la cuve auxiliaire (42), de sorte que la surface libre du vin contenu dans la cuve auxiliaire (42) soit au-dessus de ladite paroi supérieure (18) de la cuve de vinification (12),
- d'isoler la surface libre du vin contenu dans la cuve auxiliaire (12) de l'atmosphère et de poursuivre la vinification en l'absence de contact avec l'atmosphère.

8. Procédé de vinification selon la revendication 7, dans lequel l'isolement de la surface libre du vin de l'atmosphère comprend le gonflage d'une vessie d'air (50) agencée entre un couvercle amovible (46) de la cuve auxiliaire (42) et la surface libre du vin contenu dans la cuve auxiliaire (42).

9. Procédé de vinification selon la revendication 7, dans lequel l'isolement de la surface libre du vin de l'atmosphère comprend le remplissage en gaz inerte de la partie d'extrémité supérieure de la cuve auxiliaire (42) comprise entre un couvercle (46) et la surface libre du vin contenu dans la cuve auxiliaire (42).

10. Procédé de vinification selon la revendication 7, dans lequel l'isolement de la surface libre du vin de l'atmosphère comprend le positionnement d'un couvercle flottant (56) sur la surface libre du vin contenu dans la cuve auxiliaire (42), où ledit couvercle flottant a un bord en contact étanche contre la paroi intérieure de la cuve auxiliaire (42).
